# EUROPÄISCHE PATENTSCHRIFT

(11) **EP 1 140 531 B1**
(45) Veröffentlichungstag und Bekanntmachung des Hinweises auf die Patenterteilung: **18.09.2002**
(21) Anmeldenummer: 99963448.8
(22) Anmeldetag: 09.12.1999
(51) Int. Cl.: B60H 1/00, B60Q 3/04

(54) **BELEUCHTBARE BEDIENEINHEIT EINER KRAFTFAHRZEUGKLIMAANLAGE**
OPERATING UNIT WHICH CAN BE ILLUMINATED AND WHICH IS PROVIDED FOR A MOTOR VEHICLE AIR CONDITIONING SYSTEM
UNITE DE COMMANDE ECLAIRABLE D'UNE INSTALLATION DE CLIMATISATION DE VEHICULE AUTOMOBILE

(30) Priorität: 16.12.1998 DE 19857980
(43) Veröffentlichungstag der Anmeldung: 10.10.2001
(73) Patentinhaber: Siemens Aktiengesellschaft, 80333 München (DE)
(72) Erfinder: KEMPKEN, Ludger, D-64331 Weiterstadt (DE)
(86) Internationale Anmeldenummer: EP9909686
(87) Internationale Veröffentlichungsnummer: WO00035691

(56) Entgegenhaltungen:
- US-A- 4 323 895
- US-A- 5 455 463
- G. WALLISER: "BORDNETZ" ELEKTRONIK IM KRAFTFAHRZEUGWESEN, Bd. 2, 1997, Seiten 661-663, XP000878951 in der Anmeldung erwähnt

## Beschreibung

Die Erfindung betrifft die Bedieneinheit einer fest in einem Kraftfahrzeug installierten Anlage mit mehreren Bedienelementen, Symbolen und/oder Markierungen, die durch in der Bedieneinheit integrierte und von einem Bordnetz versorgte Lichtquellen beleuchtbar sind.

Entsprechende Bedieneinheiten werden beispielsweise für die Bedienung von Kraftfahrzeugklimaanlagen eingesetzt. Durch unterschiedliche Bedienelemente können dabei verschiedene Einstellungen der Klimaanlage vorgenommen werden. Zur Orientierung des Fahrers über die Einstellungen sind mehrere Symbole und/oder Markierungen vorhanden. Die sichere Bedienung der Klimaanlage durch den Fahrer muß insbesondere auch bei Dunkelheit gewährleistet sein. Daher sind die Bedienelemente, die Symbole und/oder die Markierungen beleuchtbar. Hierzu sind eine oder mehrere Lichtquellen in die Bedieneinheit integriert. Die Spannungsversorgung der Lichtquelie(n) erfolgt vom Bordnetz des Kraftfahrzeuges, dessen Spannung zur Zeit bei Personenkraftwagen 12 V beträgt. Aufgrund der in modernen Personenkraftwagen vorhandenen Vielzahl an elektrischen Verbrauchern mit hoher Leistungsaufnahme werden für die Zukunft auch Bordnetze mit einer höheren Spannung in Erwägung gezogen (Walliser, Gerhard: Elektronik im Kraftfahrzeugwesen, 2. Auflage, expert-Verlag, Renningen-Malsheim 1997, S. 661- 663).

Unterschiedliche Spannungen in den Bordnetzsystemen sind bereits heute bei Lastkraftwagen Realität. In Europa beträgt die Bordnetzspannung von LKW's 24 V, in Amerika dagegen nur 12 V. Beleuchtbare Bedieneinheiten von Klimaanlagen werden daher je nach Verkaufsland des LKW's mit unterschiedlichen Lichtquellen hergestellt. Dies erfordert bei den Herstellern entsprechenden Aufwand in der Herstellung und Bereithaltung der Bedieneinheiten. Ähnlich wird es sich verhalten, falls bei Personenkraftwagen eine zweite Bordnetzspannung eingeführt wird, da diese Umstellung wahrscheinlich nicht gleichzeitig bei allen Fahrzeugtypen erfolgen wird.

Hier setzt die Erfindung nun an, der die Aufgabe zugrunde liegt, ein einheitliches beleuchtbares Bedienelement für unterschiedliche Bordnetzspannungen von z.B. 12 V und 24 V oder 12 V und 48 V anzugeben.

Die Aufgabe wird erfindungsgemäß dadurch gelöst, daß eine Anzahl n von Lichtquellen oder Lichtquellengruppen und n+1 Anschlußkontakte vorhanden sind, wobei n>1 ist und die n+1 Anschlußkontakte so angeordnet sind, daß eine Parallelschaltung der n Lichtquellen oder Lichtquellengruppen realisierbar ist.

Durch den erfindungsgemäßen Einsatz einer Anzahl n von Lichtquellen und die Herausführung aller n+1 Anschlußkontakte der Lichtquellen aus dem Bediengerät ist es möglich, dieses durch einfaches unterschiedliches Kontaktieren sowohl mit einem Bordnetz von 12 V zu betreiben als auch mit einem Bordnetz dessen Spannung n*12 V, also ein ganzzahliges Vielfaches von 12 V beträgt. Von praktischer Bedeutung sind insbesondere Anordnungen mit n = 2 oder 4. Im Falle von Klimaanlagen für LKW, die sowohl für den europäischen Markt mit einer Bordnetzspannung von 24 V als auch für den amerikanischen Markt mit einer Bordnetzspannung von 12 V vorgesehen sind, kann somit ein und dieselbe Klimaanlage mit zugehöriger Bedieneinheit verwendet werden. In diesem Fall weist die Bedieneinheit zwei Lichtquellen auf, die hintereinander geschaltet sind. Neben den beiden äußeren Anschlußkontakten ist auch der Mittelkontakt, der beide Lichtquellen verbindet, aus der Bedieneinheit herausgeführt. Wird die Bedieneinheit in einen LKW für den europäischen Markt eingebaut, so wird an den einen äußeren Kontakt die Bordnetzspannung von 24 V angelegt, der zweite äußere Kontakt wird mit der Fahrzeugmasse verbunden während der Mittelkontakt unbenutzt bleibt. In diesem Falle wird also eine Reihenschaltung der Lichtquellen realisiert. Wird dieselbe Bedieneinheit in einen LKW eingebaut, der für den amerikanischen Markt bestimmt ist, so wird die Bordnetzspannung von 12 V an den Mittelkontakt angeschlossen, während die beiden äußeren Anschlußkontakte mit der Fahrzeugmasse verbunden werden. Die jeweilige Beschaltung kann somit durch geeignete Bestückung des Kabelbaums im Fahrzeug sichergestellt werden. Andererseits können die jeweiligen Kontaktanschlüsse aber auch auf andere geeignete Weise außen gebrückt werden. Mit dem erfindungsgemäßen Bediengerät wird somit auf einfache Weise sichergestellt, daß ein einziges Bediengerät für zwei Spannungssysteme eingesetzt werden kann.

Bei Personenkraftwagen treten durch die hohe Anzahl von leistungsstarken Verbrauchern mit dem bestehenden 12 V Bordnetz in den Zuleitungen teilweise sehr hohe Ströme mit den entsprechend hohen ohmschen Verlusten auf. Wie eingangs erwähnt wird deshalb ein zweites Bordnetz mit höherer Netzspannung von z.B. 42 oder 48 V in Erwägung gezogen. Über einen längeren Zeitraum wären in diesem Falle somit Fahrzeuge mit Bordnetzen von 12 V und einer höheren Spannung oder auch beiden im Verkehr. Insbesondere im Zubehörhandel sind deshalb Nachrüstklimaanlagen von Interesse, deren Bedieneinheit mit beiden Spannungssystemen versorgt werden kann. In diesem Falle sind vier Lichtquellen erforderlich, die intern hintereinander geschaltet sind. Es sind wiederum sowohl die äußeren Anschlußkontakte als auch die nunmehr drei Mittelkontakte aus der Bedieneinheit herausgeführt. Bei Betrieb am 48 V Bordnetz werden nur die beiden äußeren Anschlußkontakte mit 48 V bzw. Masse belegt. Eine solche Anordnung kann mit einer etwas verringerten Lichtstärke auch an einem 42 V Bordnetz betrieben werden. Bei Betrieb an einem 12V Bordnetz erfolgt wiederum eine Parallelschaltung der Lichtquellen.

Neben Einzellichtquellen sind auch Gruppen von Lichtquellen möglich, die dann innerhalb der Gruppe beliebig verschaltet sein können. Bei solchen Gruppen von Lichtquellen kann es sich beispielsweise um mehrere Leuchtdioden handeln. Jedoch sind außer Leuchtdioden alle bekannten Lichtquellen wie insbesondere Glühlampen oder Leuchtstofflampen einsetzbar. Beim Einsatz von Leuchtdioden ist zu beachten, daß bei Reihen- und Parallelschaltung teilweise unterschiedliche Stromrichtungen auftreten, so daß Leuchtdioden unter Umständen in Sperrichtung betrieben werden. Gegebenenfalls sind deshalb weitere Vorkehrungen erforderlich, wie z. B. die Parallelschaltung zweier unterschiedlich gepolter Leuchtdioden anstelle einer einzigen Leuchtdiode.

Die Erfindung wird nachfolgend anhand der Ausführungsbeispiele und Figuren näher erläutert. Es zeigen:
- Figur 1: die Beleuchtungsbeschaltung einer Bedieneinheit für 12 V und 24 V Bordnetze,
- Figur 2: die Beleuchtungsbeschaltung einer Bedieneinheit für 12 V und 48 V Bordnetze,
- Figur 3: den Beleuchtungsaufbau bei Einsatz von Lichtquellengruppen,
- Figur 4: die schematische Darstellung einer Kraftfahrzeugklimaanlage.

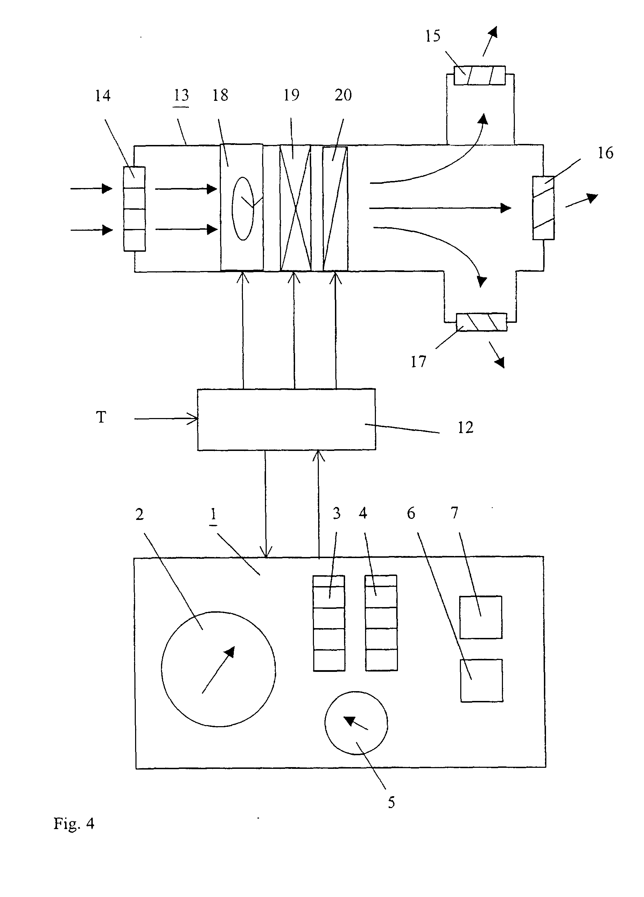

In Figur 4 ist eine Kraftfahrzeugklimaanlage schematisch dargestellt. Die Bedieneinheit 1 enthält ein Bedienelement 2 zur Umschaltung zwischen einem automatischen und mehreren individuell einstellbaren Betriebszuständen. Für die Einstellung der Temperatur der Fahrer- und Beifahrerseite sind Temperatureinstellelemente 3, 4 vorhanden. Mittels eines Drehschalters 5 läßt sich die Drehzahl des Lüftungsgebläses 18 einstellen. Ferner sind Bedienelemente 6, 7 vorhanden, mit denen auf Umluftbetrieb geschaltet bzw. die Heckscheibenheizung aktiviert werden kann.

Zur Luftzuführung in den Innenraum weist die Klimaanlage einen Luftkanal 13 auf, der die Luft von der Lufteinströmöffnung 14 mittels eines Gebläses 18 über die Kühlvorrichtung 19 und die Heizvorrichtung 20 zu den Ausströmöffnungen 15, 16, 17 in den Innenraum leitet. Die Klimaregelung erfolgt über den Klimaregler 12, der das Gebläse 18, die Kühlvorrichtung 19 und die Heizvorrichtung 20 ansteuert. Eingangssignal für den Klimaregler sind neben der Innenraumtemperatur T, die mittels eines Temperatursensors gemessen wird, auch die Einstellgrößen, die über die Bedienelemente der Bedieneinheit 1 gewählt werden.

Ist mittels des Bedienelements 2 der Bedieneinheit 1 der automatische Betriebsmodus gewählt, so erfolgt die Luftverteilung im Innenraum über die Ausströmöffnungen 15, 16, 17 in einem vorgegebenen Verhältnis. Hierzu werden Klappen in den Ausströmöffnungen entsprechend einer im Regler 12 abgespeicherten Voreinstellung mittels Elektromotoren geöffnet. Der Öffnungsgrad der Ausströmöffnungen wird automatisch mittels eines im Klimaregler abgespeicherten Programms entsprechend der aktuellen Erfordernisse eingestellt. Die erforderlichen Eingangskenngrößen hierfür erhält der Klimaregeler über verschiedene Sensoren im Fahrzeug. Bei den Sensoren kann es sich beispielsweise um Temperatur- und Luftfeuchtigkeitssensoren handeln. Ferner können in den einzelnen Fahrzeugsitzen Sensoren, wie beispielsweise Drucksensoren, eingebaut sein, mit deren Hilfe die Zahl der im Fahrzeug befindlichen Personen erkannt wird. Abhängig von der Anzahl der Personen kann dann vom Klimaregler 12 die Frischluftzufuhr durch unterschiedliche Öffnungsgrade der Ausströmöffnungen 15, 16, 17 erhöht oder verringert werden.

Damit die Klimaanlage auch bei Dunkelheit sicher bedient werden kann ist die Bedieneinheit beleuchtbar. Dazu sind hinter der Frontblende in der Bedieneinheit Lichtquellen angeordnet, die sowohl die Bedienelemente als auch vorhandene Symbole und Markierungen beleuchten. Zum gezielten Führen des Lichtes können Lichtleiter vorhanden sein, die das Licht zu den Symbolen und Markierungen auf der Frontblende leiten. Die Spannungsversorgung der Lichtquellen erfolgt durch die Bordnetzversorgung über einen geeigneten Kabelbaum.

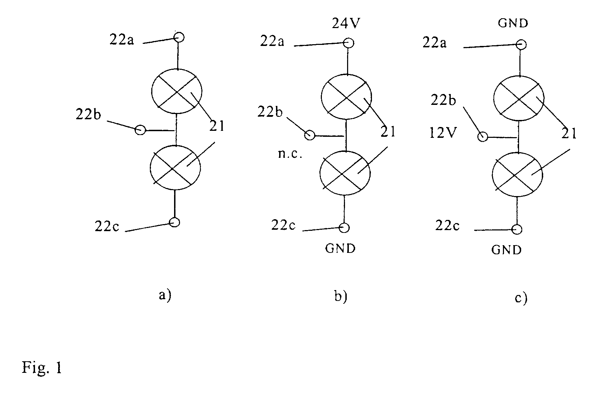

In Figur 1a ist als erstes Ausführungsbeispiel die Ausgestaltung des Beleuchtungsteils der Bedieneinheit 1 näher dargestellt, das sowohl für 12 V als auch für 24 V Bordnetze geeignet ist. Hierzu sind zwei Lichtquellen 21 miteinander verbunden, die jeweils für eine Nennbetriebsspannung von 12 V ausgelegt sind. Die äußeren Anschlußkontakte 22a, 22c werden ebenso aus der Bedieneinheit 1 herausgeführt wie der Mittelkontakt 22b. Figur 1b zeigt die Anschlußbelegung der Anschlußkontakte 22 bei Betrieb an einem 24 V Bordnetz. Der erste äußere Anschlußkontakt 22a ist mit der 24 V Spannung belegt, der zweite äußere Anschlußkontakt 22c ist mit der Fahrzeugmasse (GND) verbunden, während der Mittelkontakt 22b in diesem Falle nicht angeschlossen ist (n.c.).

Figur 1b zeigt die Anschlußbelegung der Anschlußkontakte 22 bei Betrieb an einem 12 V Bordnetz. In diesem Fall wird der Mittelkontakt 22b mit der Bordspannung verbunden, während die beiden äußeren Anschlußkontakte mit der Fahrzeugmasse verbunden werden. Somit wird hier eine Parallelschaltung der beiden Lichtquellen 21 ohne Eingriff in die Bedieneinheit realisiert. In beiden Fällen liegt an jeder Lichtquelle deren Nennbetriebsspannung von 12 V an.

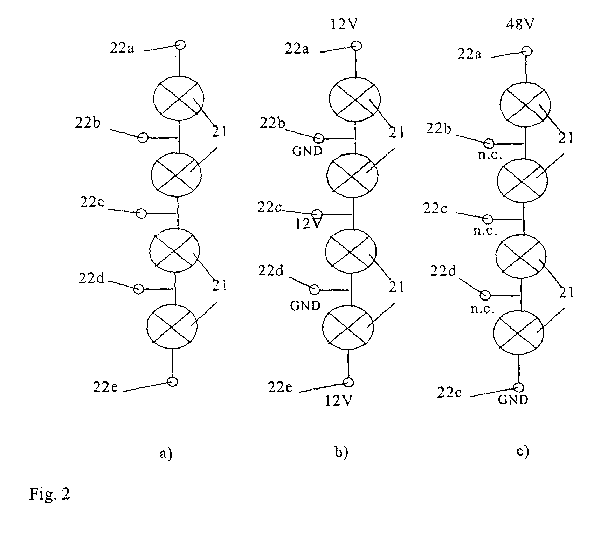

In Figur 2a ist als zweites Ausführungsbeispiel die Ausgestaltung des Beleuchtungsteils der Bedieneinheit 1 näher dargestellt, das sowohl für 12 V als auch für 48 V Bordnetze geeignet ist. Hierzu sind vier Lichtquellen 21 miteinander verbunden. Die äußeren Anschlußkontakte 22a, 22e werden ebenso aus der Bedieneinheit 1 herausgeführt wie die weiteren Anschlußkontakte 22b, 22c, 22d. Figur 2b zeigt die Anschlußbelegung der Anschlußkontakte bei Betrieb an einem 12 V Bordnetz. Die beiden äußeren Anschlußkontakte 22a, 22e sowie der mittlere Anschlußkontakt 22c sind hier mit der 12 V Spannungsversorgung verbunden, während die beiden verbleibenden Anschlußkontakte 22b, 22d mit der Fahrzeugmasse verbunden sind. Hierdurch entsteht wiederum eine Parallelschaltung der einzelnen Lichtquellen 21 ohne Eingriff in das Bediengerät.

In Figur 2c ist die Beschaltung des Beleuchtungsteils für den Betrieb an einem 48 V Bordnetz dargestellt. In diesem Fall ist der erste äußere Anschlußkontakt 22a mit der Bordnetzspannung und der zweite äußere Anschlußkontakt 22e mit der Fahrzeugmasse verbunden, so daß sich eine Reihenschaltung der Lichtquellen ergibt.

Die Erfindung wurde an zwei Ausführungsbeispielen beschrieben, wobei eine Bedieneinheit jeweils für den Betrieb an zwei unterschiedlichen Bordnetzen geeignet ist. Das Bordnetz mit höherer Spannung weist dabei eine um einen geradzahligen Faktor höhere Spannung auf als das Bordnetz mit niedrigerer Spannung. Allgemein wird bei Betrieb an der höheren Spannung eine Reihenschaltung und bei Betrieb an der niedrigeren Spannung eine Parallelschaltung der Lichtquellen 21 ausschließlich durch äußeren Anschluß der Anschlußkontakte 22 realisiert.

Geringfügige Abweichungen der höheren Spannung von dem geradzahligen Vielfachen der niedrigeren Spannung sind möglich, ohne den Grundgedanken der Erfindung zu verlassen. So ist beispielsweise das in Figur 2 beschriebene System auch bei einer Bordnetzspannung von 45 V oder 42 V einsetzbar, ohne daß hierdurch eine nennenswert geringere Beleuchtungsstärke auftreten würde.

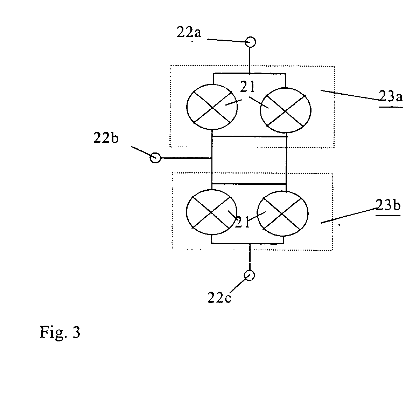

Anstelle der in den Ausführungsbeispielen nach Figuren 1 und 2 eingezeichneten Einzellichtquellen 21 ist auch der Einsatz von Lichtquellengruppen, wie beispielsweise von Leuchtdiodengruppen möglich. Figur 3 zeigt eine Ausführungsform für Bordnetze von 12 V und 24 V mit Lichtquellengruppen 23, die aus einzelnen Lichtquellen 21 bestehen. Im dargestellten Ausführungsbeispiel sind die Lichtquellen 21 einer Lichtquellengruppe 23 parallel geschaltet, jedoch ist jede beliebige Verschaltung der Einzellichtquellen innerhalb einer Lichtquellengruppe 23 und somit insbesondere auch eine Reihenschaltung der Lichtquellen 21 innerhalb einer Lichtquellengruppe 23 möglich.

Da die erfindungsgemäße Bedieneinheit zumindest zwei Lichtquellen aufweist, ist es auch möglich, Lichtquellen unterschiedlicher Farbe zu verwenden und so beispielsweise Bedienelemente oder Symbole mit unterschiedlicher Farbe zu beleuchten, um dem Fahrer die Bedienung während der Dunkelheit weiter zu erleichtern.

## Patentansprüche

1. Bedieneinheit (1) einer fest in einem Kraftfahrzeug installierten Anlage mit mehreren Bedienelementen (2 - 7), Symbolen und/oder Markierungen, die durch in der Bedieneinheit (1) integrierte und von einem Bordnetz versorgte Lichtquellen (21) beleuchtbar sind, **dadurch gekennzeichnet, daß** eine Anzahl n von Lichtquellen (21) oder Lichtquellengruppen (23) und n+1 Anschlußkontakte (22) vorhanden sind, wobei n>1 ist und die n+1 Anschlußkontakte (22) so angeordnet sind, daß eine Parallelschaltung der n Lichtquellen (21) oder Lichtquellengruppen (23) realisierbar ist.

2. Bedieneinheit nach Anspruch 1, **dadurch gekennzeichnet, daß** eine Reihenschaltung der Lichtquellen realisierbar ist.

3. Bedieneinheit nach Anspruch 1 oder 2, **dadurch gekennzeichnet, daß** es sich um die Bedieneinheit einer Klimaanlage handelt.

4. Bedieneinheit nach einem der vorhergehenden Ansprüche, **dadurch gekennzeichnet, daß** n = 2 oder 4 ist.

5. Bedieneinheit nach Anspruch 4, **dadurch gekennzeichnet, daß** zwei Lichtquellen (21) oder Lichtquellengruppen (23) sowie drei Anschlußkontakte (22a, 22b, 22c) vorhanden sind, die Spannung des Bordnetzes 24 V beträgt und die Lichtquellen oder Lichtquellengruppen in Reihe geschaltet sind, wobei ein Anschlußkontakt unbenutzt ist.

6. Bedieneinheit nach Anspruch 4, **dadurch gekennzeichnet, daß** zwei Lichtquellen (21) oder Lichtquellengruppen (23) sowie drei Anschlußkontakte (22a, 22b, 22c) vorhanden sind, die Spannung des Bordnetzes 12 V beträgt und die Lichtquellen oder Lichtquellengruppen parallel geschaltet sind.

7. Bedieneinheit nach Anspruch 4, **dadurch gekennzeichnet, daß** vier Lichtquellen (21) oder Lichtquellengruppen (23) sowie fünf Anschlußkontakte (22a, 22b, 22c, 22d, 22e) vorhanden sind, die Spannung des Bordnetzes 42 V oder 48 V beträgt und die Lichtquellen oder Lichtquellengruppen in Reihe geschaltet sind, wobei drei Anschlußkontakte unbenutzt sind.

8. Bedieneinheit nach Anspruch 4, **dadurch gekennzeichnet, daß** vier Lichtquellen (21) oder Lichtquellengruppen (23) sowie fünf Anschlußkontakte (22a, 22b, 22c, 22d, 22e) vorhanden sind, die Spannung des Bordnetzes 12 V beträgt und die Lichtquellen oder Lichtquellengruppen parallel geschaltet sind.

9. Bedieneinheit nach einem der vorhergehenden Ansprüche, **dadurch gekennzeichnet, daß** es sich bei den Lichtquellen um Glühlampen handelt.

10. Bedieneinheit nach einem der vorhergehenden Ansprüche, **dadurch gekennzeichnet, daß** es sich bei den Lichtquellen um Leuchtdioden handelt.

11. Bedieneinheit nach einem der vorhergehenden Ansprüche, **dadurch gekennzeichnet, daß** es sich bei den Lichtquellen um Leuchtstofflampen handelt.

12. Bedieneinheit nach einem der vorhergehenden Ansprüche, **dadurch gekennzeichnet, daß** Lichtquellen unterschiedlicher Farbe vorhanden sind.

## Claims

1. Control unit (1) of a system permanently installed in a motor vehicle, having a plurality of control elements (2-7), symbols and/or markings which can be illuminated by light sources (21) which are integrated in the control unit (1) and supplied by the vehicle electrical system, **characterized in that** a number n of light sources (21) or groups of light sources (23) and n+1 connecting contacts (22) are present, in which case n>1 and the n+1 connecting contacts (22) are arranged such that it is possible to implement a parallel connection of the n light sources (21) or groups of light sources (23).

2. Control unit according to Claim 1, **characterized in that** it is possible to implement a series connection of the light sources.

3. Control unit according to Claim 1 or 2, **characterized in that** the control unit is an air conditioner.

4. Control unit according to one of the preceding claims, **characterized in that** n = 2 or 4.

5. Control unit according to Claim 4, **characterized in that** two light sources (21) or groups of light sources (23) and three connecting contacts (22a,22b,22c) are present, the voltage of the vehicle electrical system is 24 V and the light sources or groups of light sources are connected in series, one connecting contact being unused.

6. Control unit according to Claim 4, **characterized in that** two light sources (21) or groups of light sources (23) and three connecting contacts (22a,22b,22c) are present, the voltage of the vehicle electrical system is 12 V and the light sources or groups of light sources are connected in parallel.

7. Control unit according to Claim 4, **characterized in that** four light sources (21) or groups of light sources (23) and five connecting contacts (22a,22b,22c,22d,22e) are present, the voltage of the vehicle electrical system is 42 V or 48 V, and the light sources or groups of light sources are connected in parallel, three connecting contacts being unused.

8. Control unit according to Claim 4, **characterized in that** four light sources (21) or groups of light sources (23) and five connecting contacts (22a,22b,22c,22d,22e) are present, the voltage of the vehicle electrical system is 12 V and the light sources or groups of light sources are connected in parallel.

9. Control unit according to one of the preceding claims, **characterized in that** the light sources are incandescent lamps.

10. Control unit according to one of the preceding claims, **characterized in that** the light sources are light-emitting diodes.

11. Control unit according to one of the preceding claims, **characterized in that** the light sources are fluorescent lamps.

12. Control unit according to one of the preceding claims, **characterized in that** light sources of different colour are present.

## Revendications

1. Unité de commande (1) d'une installation montée à demeure dans un véhicule automobile, comprenant plusieurs éléments de commande (2 - 7), symboles et/ou marquages, qui peuvent être éclairés au moyen de sources de lumière (21) intégrées dans l'unité de commande (1) et alimentées par un réseau de bord, **caractérisée en ce qu'**il est prévu un nombre n de sources de lumière (21) ou groupes de sources de lumière (23) et n+1 contacts de connexion (22), n étant > 1 et les n+1 contacts de connexion (22) étant disposés d'une manière telle qu'un montage en circuit parallèle des n sources de lumière (21) ou groupes de sources de lumière (23) est réalisable.

2. Unité de commande suivant la revendication 1, **caractérisée en ce qu'**un montage en circuit série des sources de lumière est réalisable.

3. Unité de commande suivant la revendication 1 ou 2, **caractérisée en ce qu'**il s'agit de l'unité de commande d'une installation de climatisation.

4. Unité de commande suivant l'une des revendications précédentes, **caractérisé en ce que** n est = 2 ou 4.

5. Unité de commande suivant la revendication 4, **caractérisée en ce qu'**il est prévu deux sources de lumière (21) ou groupes de sources de lumière (23) et trois contacts de connexion (22a, 22b, 22c), la tension du réseau de bord vaut 24 V et les sources de lumière ou groupes de sources de lumière sont connectés en série, un contact de connexion étant inutilisé.

6. Unité de commande suivant la revendication 4, **caractérisée en ce qu'**il est prévu deux sources de lumière (21) ou groupes de sources de lumière (23) et trois contacts de connexion (22a, 22b, 22c), la tension du réseau de bord vaut 12 V et les sources de lumière ou groupes de sources de lumière sont connectés en parallèle.

7. Unité de commande suivant la revendication 4, **caractérisée en ce qu'**il est prévu quatre sources de lumière (21) ou groupes de sources de lumière (23) et cinq contacts de connexion (22a, 22b, 22c, 22d, 22e), la tension du réseau de bord vaut 42 V ou 48 V et les sources de lumière ou groupes de sources de lumière sont connectés en série, trois contacts de connexion étant inutilisés.

8. Unité de commande suivant la revendication 4, **caractérisée en ce qu'**il est prévu quatre sources de lumière (21) ou groupes de sources de lumière (23) et cinq contacts de connexion (22a, 22b, 22c, 22d, 22e), la tension du réseau de bord vaut 12 V et les sources de lumière ou groupes de sources de lumière sont connectés en parallèle.

9. Unité de commande suivant l'une des revendications précédentes, **caractérisée en ce qu'**en ce qui concerne les sources de lumière, il s'agit de lampes à incandescence.

10. Unité de commande suivant l'une des revendications précédentes, **caractérisée en ce qu'**en ce qui concerne les sources de lumière, il s'agit de diodes lumineuses.

11. Unité de commande suivant l'une des revendications précédentes, **caractérisée en ce qu'**en ce qui concerne les sources de lumière, il s'agit de tubes fluorescents.

12. Unité de commande suivant l'une des revendications précédentes, **caractérisée en ce qu'**il est prévu des sources de lumière de couleurs différentes.
